# EUROPEAN PATENT APPLICATION

(11) **EP 2 703 943 A2**
(43) Date of publication of application: **05.03.2014**
(21) Application number: 13182026.8
(22) Date of filing: 28.08.2013
(51) Int. Cl.: G06F 1/26

(54) **Apparatus and method for power switching in electronic device**

(30) Priority: 29.08.2012 KR 20120094661
(71) Applicant: Samsung Electronics Co., Ltd, Gyeonggi-do 443-742 (KR)
(72) Inventor: Kim, Beom-Ju, Gyeonggi-do (KR)
(74) Representative: Nederlandsch Octrooibureau

(57) **Abstract**

An apparatus and a method for controlling power in an electronic device are provided. The apparatus includes a switching unit configured to selectively supply a load with one of a first power, which is continuously generated, and a second power, which is discontinuously generated, during operation of the electronic device, and a control unit configured to control switching of the switching unit such that the second power is supplied to the electronic device after a delay of a predetermined time upon generation of the second power.

## Description

### BACKGROUND OF THE INVENTION

### 1. Field of the Invention:

The present invention relates to a method of supplying power to an electronic device and an electronic device thereof.

### 2. Description of the Related Art:

In modem society, the use of portable terminals has drastically increased due to their convenience, thereby making the portable terminals widely used. Accordingly, service providers and terminal manufacturers are providing additional functions to increase the use of portable terminals.

The portable terminal is primarily powered by a battery due to its portability. However, the portable terminal may also be supplied with external power through a Travel Adapter (TA) for example. That is, the portable terminal can use the external power along with the battery. Furthermore, the TA can be used to charge the battery which has a limited capacity.

As described above, the portable terminal may be powered by a plurality of units or power supplies, such as the battery and the TA. Therefore, there is a need for a scheme for efficiently managing a plurality of power supplies.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for efficiently managing a plurality of power supplies in an electronic device.

Another aspect of the present invention is to provide an apparatus and method for stably switching a plurality of power supplies in an electronic device.

Another aspect of the present invention is to provide an apparatus and method for preventing a voltage from dropping upon switching of power in an electronic device.

Another aspect of the present invention is to provide an apparatus and method for implementing a power switching circuit having a small size in an electronic device.

In accordance with an aspect of the present invention, an apparatus for controlling power in an electronic device is provided. The apparatus includes a switching unit configured to selectively supply a load with one of first power, which is continuously generated, and second power, which is discontinuously generated, during operation of the electronic device, and a control unit configured to control switching of the switching unit such that the second power is supplied to the electronic device after a delay of a predetermined time upon generation of the second power.

In accordance with another aspect of the present invention, a method for controlling power in an electronic device is provided. The method includes supplying a load with first power, which is continuously generated, during operation of the electronic device, and supplying the load with second power, which is discontinuously generated, after delay of a predetermined time when the second power is generated.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features, and advantages of certain exemplary embodiments of the present invention will be more apparent from the following description taken in conjunction with the accompanying drawings, in which:

FIG. 1 is a diagram illustrating a power supply mechanism in an electronic device according to an exemplary embodiment of the present invention;

FIG. 2 is a diagram illustrating a power control mechanism in an electronic device according to an exemplary embodiment of the present invention;

FIG. 3 is a diagram illustrating a block configuration of a switching control unit in an electronic device according to an exemplary embodiment of the present invention;

FIG. 4 is a diagram illustrating an implementation example of a switching control unit in an electronic device according to an exemplary embodiment of the present invention;

FIG. 5 is a diagram illustrating another implementation example of a switching control unit in an electronic device according to an exemplary embodiment of the present invention;

FIG. 6 is a diagram illustrating a block configuration of an electronic device according to an exemplary embodiment of the present invention;

FIG. 7 is a diagram illustrating an operation process of an electronic device according to an exemplary embodiment of the present invention; and

FIGS. 8A and 8B are diagrams illustrating the performance of a power supply mechanism according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

Various embodiments of the present invention provide a technique for efficiently managing a plurality of power supplies in an electronic device. The electronic device may be a portable electronic device, examples of which may include a smart phone, a portable terminal, a mobile phone, a mobile pad, a media player, a tablet computer, a handheld computer, and a Personal Digital Assistant (PDA). The electronic device may be a device into which two or more functions of the above-described devices are integrated. However, the present invention is not limited to the above-described devices, and may be similarly applicable to any electronic device that requires power supply.

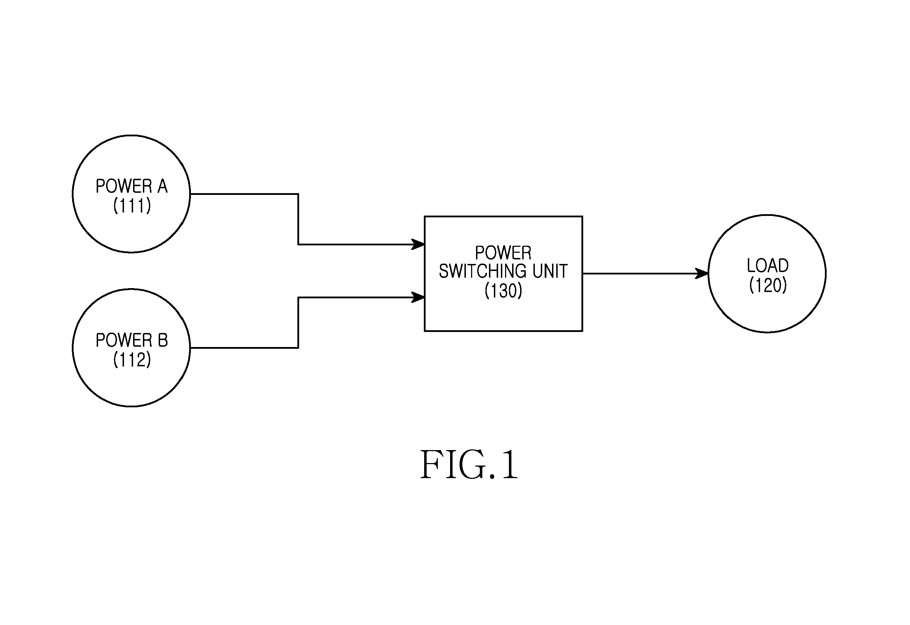

FIG. 1 illustrates a power supply mechanism in an electronic device according to an exemplary embodiment of the present invention.

Referring to FIG. 1, at least one of power A 111 and power B 112 may be supplied to a load 120. A power switching unit 130 performs switching between power supply paths such that one of the power A 111 and the power B 112 is supplied to the load 120.

The power A 111 is continuously supplied to the electronic device during the electronic device's operation, and the power B 112 is discontinuously supplied thereto depending on a situation. For example, the power A 110 is supplied from a battery, and the power B 112 is supplied from a Travel Adapter (TA). In this case, the power A 111 is continuously supplied from the battery until the battery is completely discharged, and the power B 112 is supplied from the TA only when the TA is connected to the electronic device. In this case, the embodiments of the present invention are not limited to the case of including the battery and the TA, and are similarly applicable to any case in which a continuous power supply and a discontinuous power supply are provided. The load 120 includes at least one element requiring power in the electronic device. For example, the load 120 may include an operational device, an input device, a display device, and a communication device.

Depending on whether the power B 112 is generated, the power switching unit 130 performs switching between power supply paths. That is, when the power B 112 is not supplied, the power switching unit 130 connects the power A 111 to the load 120 such that the power A 111 is supplied to the load 120. When the power B 112 is supplied, the power switching unit 130 connects the power B 112 to the load 120 such that the power B 112 is supplied to the load 120. As a result, the load 120 is supplied with the power B 112 when the power B 112 is generated, and is supplied with power A 111 when the power B 112 is not generated. That is, a relationship in which the power B 112 is supplied more preferentially than the power A 111 is established.

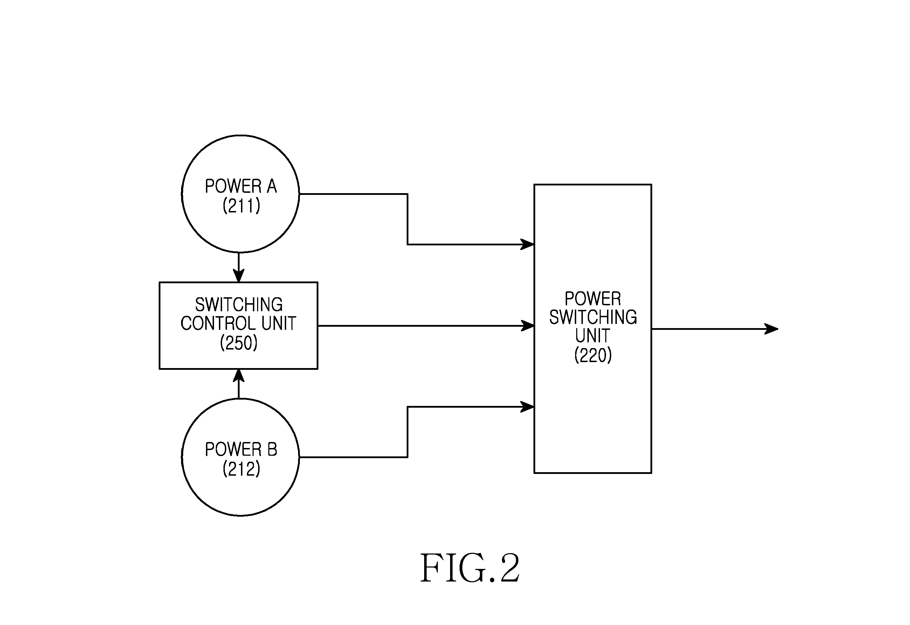

FIG. 2 illustrates a power supply control mechanism in an electronic device according to an exemplary embodiment of the present invention.

Referring to FIG. 2, power A 211 and power B 212 are selectively supplied to a load through a power switching unit 220. In addition, a switching control unit 250 controls the switching operation of the power switching unit 220. That is, the switching control unit 250 monitors the power A 211 and the power B 212 and controls the power switching unit 220 according to the states of the power A 211 and power B 212. That is, when the power B 212 is generated, the switching control unit 250 controls the power switching unit 220 to connect the power B 212. On the other hand, when the power B 212 is discontinued the switching control unit 250 controls the power switching unit 220 to connect the power A 211. For example, the power switching unit 220 includes a switch. The switching control unit 250 outputs a high/low signal for controlling the connection path of the switch.

When the power B is generated, the switching control unit 250 controls the power switching unit 220 to perform switching after a delay of a predetermined time. When power is newly supplied, the predetermined time is required until the power reaches a desired value, that is, until the power is stabilized. Therefore, when the switching is accomplished before the stabilization of the power, the power supplied to the load is temporarily reduced. Accordingly, the instability of the power supplied to the load has a bad effect in the operation of the electronic device. In addition, when the power B is discontinued or cut-off, the switching control unit 250 controls the power switching unit 220 to perform switching immediately without delay. Unlike the case of generation of the power, the power is discontinued immediately without requiring a stabilization time. Therefore, if the switching is not immediately performed, the power supplied to the load is immediately discontinued. As a result a bad effect occurs in the operation of the electronic device.

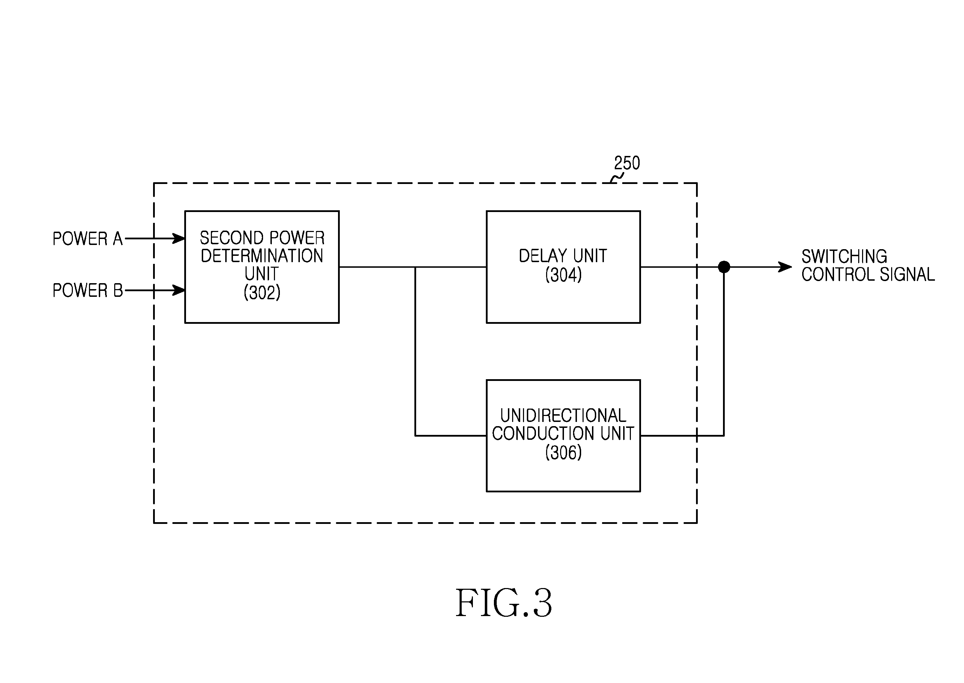

FIG. 3 illustrates a block configuration of the switching control unit 250 in the electronic device according to an exemplary embodiment of the present invention.

Referring to FIG. 3, the switching control unit 250 includes a second power determination unit 302, a delay unit 304, and a unidirectional conduction unit 306.

The second power determination unit 302 receives power A and power B, and determines whether the power B is generated. The power A is continuously supplied to the electronic device during the electronic device's operation, and the power B is discontinuously supplied thereto depending on a situation. That is, the second power determination unit 302 outputs a control signal for determining a switching direction depending on whether the power B is generated. For example, when the power B is generated, the second power determination unit 302 outputs a control signal for performing switching to supply the power B to a load. In addition, when the power B is not generated, the second power determination unit 302 outputs a control signal for performing switching to supply the power A to the load.

The delay unit 304 delays the control signal provided from the second power determination unit 302 by a predetermined time and then outputs the control signal. The delay time of the delay unit 304 may vary depending on a specific embodiment. The delay time may be determined according to the stabilization time of the power B. For example, the delay time may be longer than the stabilization time.

The unidirectional conduction unit 306 outputs the control signal according to which of the control signals is provided from the second power determination unit 302. That is, the unidirectional conduction unit 306 operates as a short circuit or an open circuit according to which of the control signals is provided thereto. For example, when the control signal is the signal for performing switching to supply the power B to the load, the unidirectional conduction unit 306 operates as an open circuit. Therefore, the control signal is output only through the delay unit 304. When the control signal is the signal for performing switching to supply the power A to the load, the unidirectional conduction unit 306 operates as a short circuit. Therefore, the control signal is output through the unidirectional conduction unit 306 before the delay time of the delay unit has elapsed.

Like the above-described embodiment, as a result of the operations of the second power determination unit 302, the delay unit 304, and the unidirectional conduction unit 306, the control signal for causing switching from the power A to the power B is output after a delay of the predetermined time, and the control signal for causing switching from the power B to the power A is output without delay.

Detailed implementation examples of the switching control unit 250 are described below with reference to the drawings.

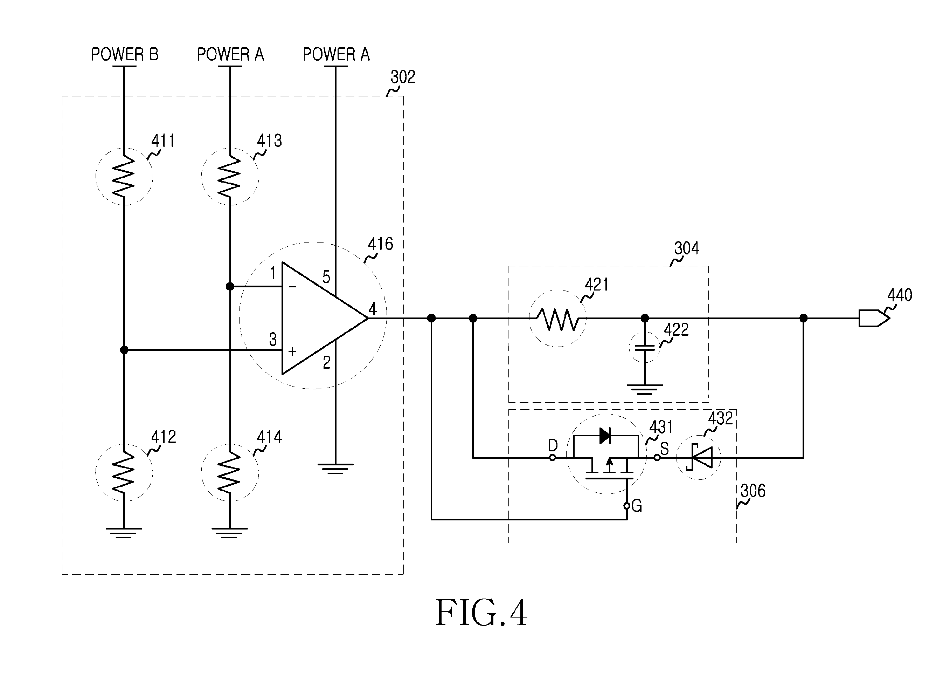

FIG. 4 illustrates an implementation example of a switching control unit in an electronic device according to an exemplary embodiment of the present invention.

FIG. 4 corresponds to an exemplary embodiment in which, when a control signal is high, switching is performed such that the power B is supplied to a load, and when the control signal is low, switching is performed such that the power A is supplied to the load.

Referring to FIG. 4, the second power determination unit 302 includes a plurality of resistors 411 to 414 and a comparator 416. The delay unit 304 includes a resistor 421 and a capacitor 422, and the unidirectional conduction unit 306 includes a transistor 431 and a diode 432.

The second power determination unit 302 will be described below in detail. The control signal for determining a switching direction is the output signal of the comparator 416, and is determined according to a result of a comparison of the voltage values of signals input to a first terminal and a third terminal of the comparator 416. A voltage value of the power A is equal to a voltage value of the power B. Therefore, if the power A and the power B are input as is, a comparison cannot be accomplished. Accordingly, the plurality of resistors 411 to 414 divide the voltage of the power A and the voltage of the power B, thereby generating a voltage difference for comparison. For example, when the power B is generated, the values of the resistors 411 to 414 are selected such that the voltage applied to a third terminal of the comparator 416 is higher than the voltage applied to the first terminal. A fifth terminal of the comparator 416 is a power supply terminal for operation of the comparator 416. According to the above-described structure, the comparator 416 outputs a high signal upon generation of the power B, and a low signal upon discontinuing of the power B.

The delay unit 304 will be described in detail below. The delay unit 304 may be configured by a Resistance-Capacitance (RC) circuit. In this case, the delay unit 304 includes a resistor 421 and a capacitor 422 as shown in FIG. 4. That is, the delay unit 304 includes a RC filter. The specific resistance of the resistor 421 and the specific capacitance of the capacitor 422 may vary according to a specific exemplary embodiment. According to another exemplary embodiment, the delay unit 304 may be implemented in a different form from the RC circuit.

The unidirectional conduction unit 306 will be described in detail below. The unidirectional conduction unit 306 includes the transistor 431 and the diode 432. The transistor 431 is a p-channel Field Effective Transistor (FET), and operates as a switch. For example, the gate and drain of the transistor 431 are connected to the output terminal of the comparator 416, and the source is connected to a final output terminal 440 through the diode 432. Therefore, when the high signal is output from the comparator 416, a VGS deviates from the operating voltage of the transistor 431, and the transistor 431 operates as an open circuit. On the other hand, when the low signal is output from the comparator 416, the VGS becomes the operating voltage of the transistor 431, and the transistor 431 operates as a short circuit. That is, the transistor 431 functions as a switch which is turned on when the low signal is applied thereto. In addition, the diode 432 is for complementing the operation of the transistor 431. The diode 432 blocks the flow of current in a direction toward the final output terminal 440, and allows only the flow of current in a direction from the final output terminal 440 to the transistor 431. That is, the cathode of the diode 432 is connected to the source of the transistor 431, and the anode of the diode 432 is connected to the final output terminal 440. Therefore, the diode 432 conducts a current only when the source of the transistor 431 is at a higher voltage than the final output terminal 440. Due to the above-described structure, the unidirectional conduction unit 306 is conductive only when the low signal is output from the comparator 416. In FIG. 4, the unidirectional conduction unit 306 includes both the transistor 431 and the diode 432. However, the unidirectional conduction unit 306 may include any one of the transistor 431 and the diode 432.

A change in a final output based on the above-described structure will be described below. In a situation where the power B does not exist, the output terminal of the comparator 416 and the final output terminal 440 are all in a low state. When the power B is generated, the output of the comparator 416 transits to a high state. Due to this, a voltage difference occurs between the output terminal of the comparator 416 and the final output terminal 440, and a current flowing from the output terminal of the comparator 416 to the final output terminal 440 is generated. Since the transistor 431 operates as an open circuit and the diode 432 blocks a current, the current flows only to the delay unit 304. Therefore, the output of the final output terminal 440 transits to a high state only after the delay time by the delay unit 304 has elapsed. As a result, the control signal for switching the power B to the load is output after a delay of the predetermined time.

In a situation where the final output terminal 440 is in a high state, when the power B is discontinued or cut-off, the output of the comparator 416 transits to a low state. Due to this, a voltage difference occurs between the output terminal of the comparator 416 and the final output terminal 440, and a current flowing from the final output terminal 440 to the output terminal of the comparator 416 is generated. In this case, the transistor 431 operates as a short circuit, and the diode 432 conducts a current. Therefore, the current flows toward both the delay unit 304 and the unidirectional conduction unit 306. Accordingly, although the delay time by the delay unit 304 has not elapsed, the output of the final output terminal 440 transits to a low state immediately due to a current flowing through the unidirectional conduction unit 306. As a result, the control signal for performing switching such that the power A is supplied to the load is output immediately after the power B is discontinued.

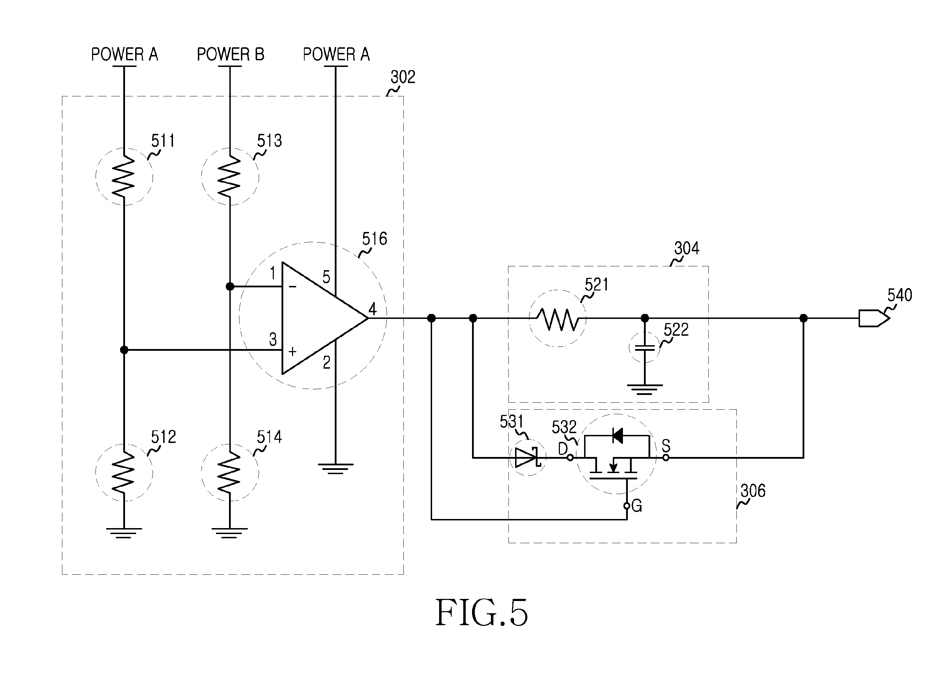

FIG. 5 illustrates another implementation example of a switching control unit in an electronic device according to an exemplary embodiment of the present invention.

FIG. 5 corresponds to an exemplary embodiment in which, when a control signal is high, switching is performed such that the power A is supplied to a load, and when the control signal is low, switching is performed such that the power B is supplied to the load.

Referring to FIG. 5, a second power determination unit 302 includes a plurality of resistors 511 to 514 and a comparator 516. A delay unit 304 includes a resistor 521 and a capacitor 522, and a unidirectional conduction unit 306 includes a diode 531 and a transistor 532.

The second power determination unit 302 will be described below in detail. The control signal for determining a switching direction is the output signal of the comparator 516, and the control signal is determined according to a result of a comparison of the voltage values of signals input to the first terminal and to the third terminal of the comparator 516. The voltage value of the power A is equal to that of the power B. Therefore, if the power A and the power B are input as they are, a comparison cannot be accomplished. Accordingly, the plurality of resistors 511 to 514 divide the voltages of the power A and the voltage of the power B, causing a voltage difference for comparison. For example, when the power B is generated, the values of the resistors 511 to 514 are selected such that the voltage applied to a third terminal of the comparator 514 is higher than a voltage applied to a first terminal of the comparator 514. A fifth terminal of the comparator 516 is a power supply terminal for operation of the comparator 516. According to the above-described structure, the comparator 516 outputs a low signal upon generation of the power B, and a high signal upon discontinuing the power B.

The delay unit 304 will be described in detail below. The delay unit 304 may be configured by a RC circuit. In this case, the delay unit 304 includes a resistor 521 and a capacitor 522 as in FIG. 5. The delay unit 304 includes a RC filter. The specific resistance of the resistor 521 and the specific capacitance of the capacitor 522 may vary according to a specific exemplary embodiment. According to another exemplary embodiment of the present invention, the delay unit 304 may be implemented in a different form from the RC circuit.

The unidirectional conduction unit 306 will be described in detail below. The unidirectional conduction unit 306 includes the diode 531 and the transistor 532. The transistor 532 is an n-channel FET, and operates as a switch. For example, the gate of the transistor 532 is connected to the output terminal of the comparator 516, the drain thereof is connected through the diode 531 to the output terminal of the comparator 516, and the source thereof is connected to a final output terminal 540. Therefore, when the low signal is output from the comparator 516, a VGS deviates from the operating voltage of the transistor 532, and the transistor 532 operates as an open circuit. On the other hand, when the high signal is output from the comparator 516, the VGS becomes the operating voltage of the transistor 532, and the transistor 532 operates as a short circuit. That is, the transistor 532 functions as a switch which is turned on when the high signal is applied thereto. In addition, the diode 531 is for complementing the operation of the transistor 532. The diode 516 blocks the flow of current in a direction from the final output terminal 540 to the transistor 532, and allows only the flow of current in a direction from the output terminal of the comparator 516 to the final output terminal 540. That is, the cathode of the diode 531 is connected to the drain of the transistor 532, and the anode of the diode 531 is connected to the output terminal of the comparator 516. Therefore, the diode 531 conducts a current only when the final output terminal 540 is at a higher voltage than the drain of the transistor 532. Due to the above-described structure, the unidirectional conduction unit 306 is conductive only when the high signal is output from the comparator 516. In FIG. 5, the unidirectional conduction unit 306 includes both the transistor 531 and the diode 532. However, the unidirectional conduction unit 306 may include any one of the diode 531 and the transistor 532.

A change in a final output based on the above-described structure will be described below. In an initial situation where the power B does not exist, the output terminal of the comparator 516 and the final output terminal 540 are all in a high state. When the power B is generated, the output terminal of the comparator 516 transits to a low state. Due to this, a voltage difference occurs between the output terminal of the comparator 516 and the final output terminal 540, and a current flowing from the output terminal of the comparator 516 to the final output terminal 540 is generated. Since the transistor 532 operates as an open circuit, and the diode 531 blocks current, the current flows only to the delay unit 304. Therefore, the output of the final output terminal 540 transits to a low state only after the delay time by the delay unit 304 has elapsed. As a result, the control signal for performing switching such that the power B is supplied to the load is output after delay of the predetermined time.

In a situation where the final output terminal 540 is in a low state, when the power B is discontinued, the output of the comparator 516 transits to a high state. Due to this, a voltage difference occurs between the output terminal of the comparator 516 and the final output terminal 540, and a current flowing from the final output terminal 540 to the output terminal of the comparator 516 is generated. In this case, the transistor 532 operates as a short circuit, and the diode 531 conducts a current. Therefore, the current flows toward both the delay unit 304 and the unidirectional conduction unit 306. Accordingly, although the delay time by the delay unit 304 has not elapsed, the output of the final output terminal 540 transits to a high state immediately due to a current flowing through the unidirectional conduction unit 306. As a result, the control signal for performing switching such that the power A is supplied to the load is output immediately after the power B is discontinued.

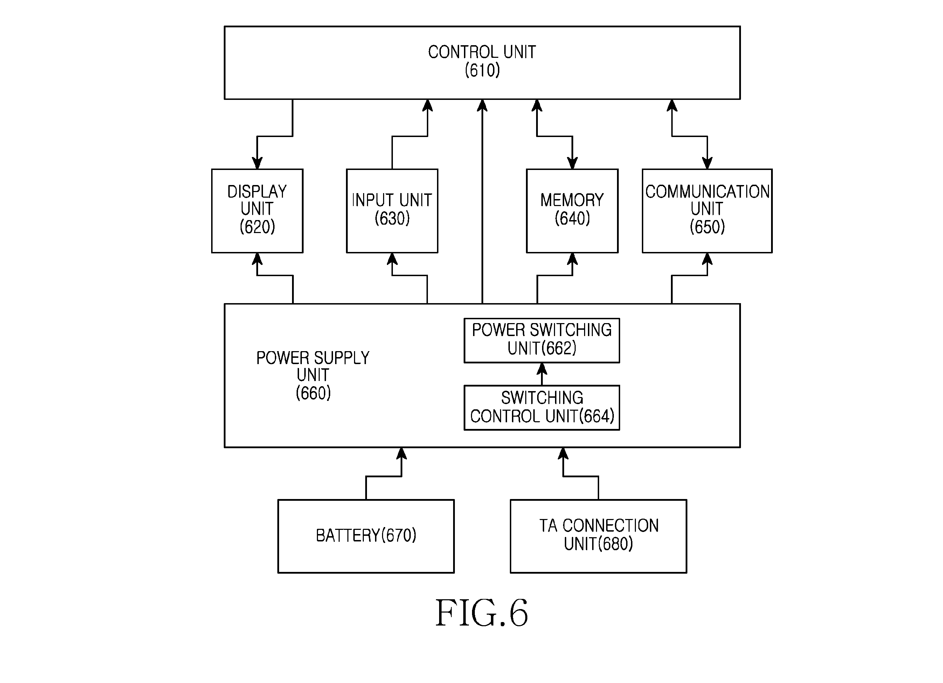

FIG. 6 illustrates a block configuration of an electronic device according to an exemplary embodiment of the present invention.

FIG. 6 illustrates a block configuration of a portable communication device in a case where a power supply mechanism according to an exemplary embodiment of the present invention is applied to the portable communication device.

Referring to FIG. 6, the electronic device includes a control unit 610, a display unit 620, an input unit 630, a memory 640, a communication unit 650, a power supply unit 660, a battery 670 and a TA connection unit 680.

The control unit 610, the display unit 620, the input unit 630, the memory 640 and the communication unit 650 all consume power, which correspond to the load in FIG. 1 and FIG. 2. The control unit 610 controls an overall operation of the electronic device, and includes at least one processor, for example, an application processor. The display unit 620 is a unit for visually transmitting information to a user, and may include at least one of a Liquid Crystal Display (LCD), a Light Emitting Diode (LED), a Light emitting Polymer Display (LPD), an Organic Light Emitting Diode (OLED), an Active Matrix Organic Light Emitting Diode (AMOLED) and a Flexible LED (FLED). The input unit 630 is a unit for processing input from the user, and may include a keypad, a touchscreen or the like. The memory 640 is a storage unit for storing an operation program, an application, setting information, user contents and the like. The communication unit 650 is a unit for providing an interface for communication with the outside, and includes a modem, a Radio Frequency (RF) processing block, an antenna, and the like.

The power supply unit 660 is a unit for supplying required power to the control unit 610, the display unit 620, the input unit 630, the memory 640, and the communication unit 650. The power supply unit 660 selectively supplies power generated from the battery 670 and power generated from the TA connected to the TA connection unit 680 to the above-described blocks. For example, the power supply unit 660 may include a power switching unit 662 for switching power and a switching control unit 664 for controlling the switching operation of the power switching unit 664. The switching control unit 664 may be configured as illustrated in FIG. 3.

The present invention may be implemented in an electronic device including a portable terminal such as, for example, a smart phone and a mobile telecommunication terminal. Hereunder, a portable terminal is used as an example for the electronic device.

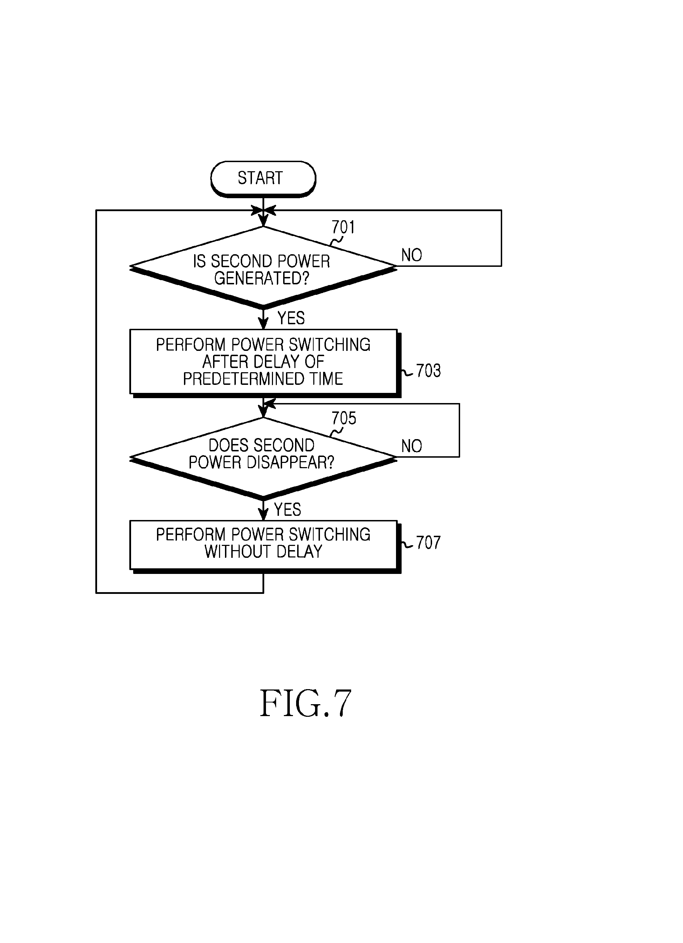

FIG. 7 illustrates an operation process of an electronic device according to an exemplary embodiment of the present invention.

Referring to FIG. 7, in operation 701, the electronic device determines whether second power is generated. In this case, the second power is power that is discontinuously supplied to the electronic device. That is, the process illustrated in FIG. 7 is under the assumption that basic power is continuously supplied to the electronic device. For example, the basic power may include power from the battery, and the second power may include power supplied from the outside upon connection of the TA.

When the second power is generated, in operation 703, the electronic device performs power switching after delay of a predetermined time. That is, the electronic device performs switching such that the electronic device uses the second power during usage of the basic power. In this case, the electronic device performs switching to the second power after the second power has been generated and the predetermined time has elapsed. For this, the power supply device provides the control signal for the switching to the switch through the delay circuit. For example, the delay time circuit may include an RC filter.

Thereafter, in operation 705, the electronic device checks whether the second power is discontinued or cut-off. The second power may be discontinued during the operation of the electronic device. For example, in a case where the second power is supplied through the TA, the second power may be discontinued when the TA is separated from the electronic device. When the second power is discontinued, only the basic power exists.

When the second power is discontinued, in operation 707, the electronic device performs power switching without time delay. That is, the electronic device performs switching such that the electronic device uses the basic power during the use of the second power. In this case, the electronic device performs switching to the basic power immediately after the second power is discontinued. For this, the power supply device provides the control signal for the switching to the switch through a unidirectional path connected in parallel to the delay circuit.

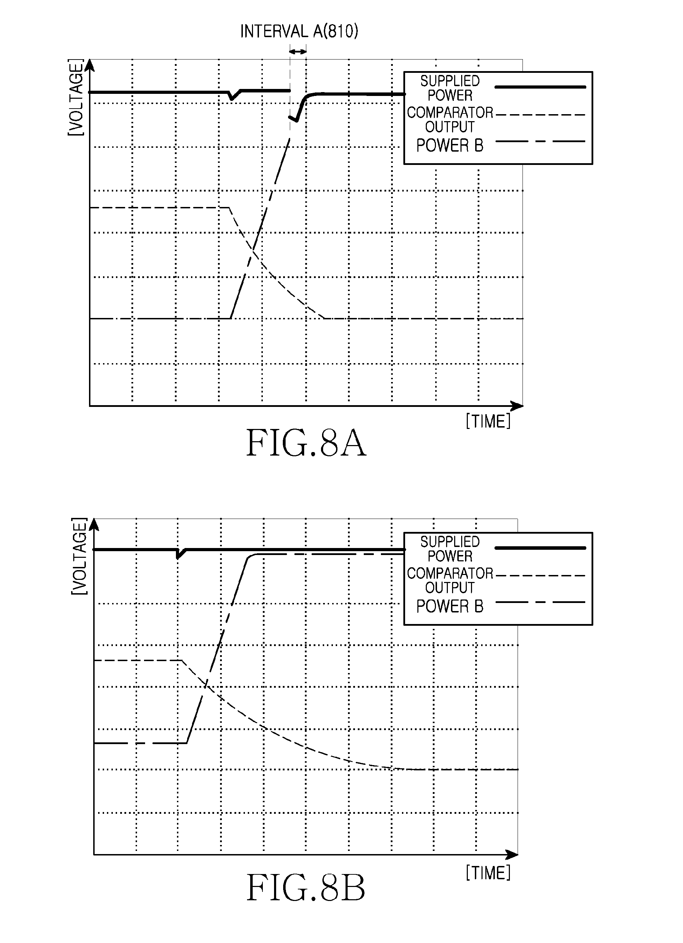

FIGS. 8A and 8B illustrate a performance of a power supply mechanism according to an exemplary embodiment of the present invention.

FIGS. 8A and 8B illustrate a change in power according to power switching when a second power is generated. FIG. 8A is a graph in a case where the power supply mechanism according to an exemplary embodiment of the present invention is not applied, and FIG. 8B is a graph in a case where the power supply mechanism according to an exemplary embodiment of the present invention is applied. Referring to FIG. 8A, since power switching is performed without a delay of the predetermined time when the second power is generated, the temporary drop of power occurs in an interval A 810. Meanwhile, referring to FIG. 8B, since power switching is performed after delay of the predetermined time when the second power is generated, power is prevented from being unstable after the second power has been stabilized prior to the switching.

When there is a plurality of power supplies in an electronic device, stable power switching is guaranteed using a small sized circuit including a delay circuit and a unidirectional circuit.

It will be appreciated that various embodiments of the present disclosure according to the claims and description in the specification can be realized in the form of hardware, software or a combination of hardware and software.

Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present disclosure.

Any such software may be stored in the form of volatile or non-volatile storage such as, for example, a storage device like a Read Only Memory (ROM), whether erasable or rewritable or not, or in the form of memory such as, for example, Random Access Memory (RAM), memory chips, device or integrated circuits or on an optically or magnetically readable medium such as, for example, a Compact Disk (CD), Digital Versatile Disc (DVD), magnetic disk or magnetic tape or the like. It will be appreciated that the storage devices and storage media are various embodiments of non-transitory machine-readable storage that are suitable for storing a program or programs comprising instructions that, when executed, implement various embodiments of the present disclosure. Accordingly, various embodiments provide a program comprising code for implementing apparatus or a method as claimed in any one of the claims of this specification and a non-transitory machine-readable storage storing such a program.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus for controlling power in an electronic device, the apparatus comprising:
a switching unit configured to selectively supply a load with one of first power, which is continuously generated, and second power, which is discontinuously generated, during operation of the electronic device; and
a control unit configured to control switching of the switching unit such that the second power is supplied to the electronic device after a delay of a predetermined time upon generation of the second power.

2. The apparatus of claim 1, wherein the predetermined time is longer than or equal to a stabilization time for the second power.

3. The apparatus of claim 1, wherein the control unit controls the switching of the switching unit such that the first power is supplied to the electronic device without delay after discontinuing the second power.

4. The apparatus of claim 3, wherein the control unit includes:
a determination unit configured to output a first control signal for switching the switching unit to supply the second power and a second control signal for switching the switching unit to supply the first power according to whether the second power is generated;
a delay unit configured to delay the first control signal by the determined time;
and
a unidirectional conduction unit configured to transmit the second control signal.

5. The apparatus of claim 4, wherein the delay unit and the unidirectional conduction unit are connected in parallel to each other; and
the unidirectional conduction unit operates as an open circuit when the first control signal is generated, and operates as a short circuit when the second control signal is generated.

6. The apparatus of claim 4, wherein the determination unit includes:
resistors for dividing a voltage of the first power and a voltage of the second power; and
a comparator for determining whether the second power is generated by comparing divided voltages with each other.

7. The apparatus of claim 4, wherein the delay unit includes a Resistance-Capacitance (RC) filter.

8. The apparatus of claim 4, wherein the unidirectional conduction unit includes a switch for being turned on when the second signal is applied thereto.

9. The apparatus of claim 8, wherein the switch includes a transistor having a gate connected to an output terminal of the determination unit.

10. The apparatus of claim 4, wherein the unidirectional conduction unit includes a diode arranged to block current flow of the first signal.

11. A method for controlling power in an electronic device, the method comprising:
supplying a load with first power, which is continuously generated, during operation of the electronic device; and
supplying the load with second power, which is discontinuously generated, after a delay of a predetermined time when the second power is generated.

12. The method of claim 11, wherein the predetermined time is longer than or equal to a stabilization time for the second power.

13. The method of claim 11, further comprising:
supplying the electronic device with the first power immediately after the second power disappears.

14. The method of claim 11, wherein the supplying of the load with the second power, which is discontinuously generated after the delay of the predetermined time when the second power is generated, includes:
providing a control signal generated according to a generation of the second power to the switch after the delay of the predetermined time.

15. The method of claim 11, further comprising:
dividing a voltage of the first power and a voltage of the second power and determining whether the second power is generated, by comparing divided voltages with each other.
